Europäisches Patentamt

(19) European Patent Office

Office européen des brevets

(11) Numéro de publication : **0 239 465 B1**

## (12) FASCICULE DE BREVET EUROPEEN

(45) Date de publication du fascicule du brevet :
04.09.91 Bulletin 91/36

(51) Int. Cl.⁵ : **H04N 9/78**

(21) Numéro de dépôt : **87400553.1**

(22) Date de dépôt : **12.03.87**

(54) Dispositif de décodage numérique de signeaux de télévision à moyens adaptatifs de séparation de la luminance et de la chrominance.

(30) Priorité : **17.03.86 FR 8603746**

(43) Date de publication de la demande :
**30.09.87 Bulletin 87/40**

(45) Mention de la délivrance du brevet :
**04.09.91 Bulletin 91/36**

(84) Etats contractants désignés :
**DE GB NL SE**

(56) Documents cités :
**DE-A- 2 943 271**
**FR-A- 2 423 104**
**GB-A- 2 079 091**
**IEEE TRANSACTIONS ON CONSUMER ELEC-
TRONICS, vol. CE-31, no. 4, novembre 1985,
pages 642-653, IEEE, New York, US; YOSHI-
MITSU NAKAJIMA et al.: "Improvement of
picture quality for NTSC and PAL systems by
digital signal processing"**

(73) Titulaire : **ETAT FRANCAIS représenté par le
Ministre des PTT (Centre National d'Etudes
des Télécommunications)
38-40 rue du Général Leclerc
F-92131 Issy-les-Moulineaux (FR)**
Titulaire : **ETABLISSEMENT PUBLIC DE
DIFFUSION dit "TELEDIFFUSION DE
FRANCE"
10, rue d'Oradour sur Glane
F-75932 Paris Cédex 15 (FR)**

(72) Inventeur : **Chassaing, Françoise
24 rue des Bersaudières
La Chapelle des Fougeretz 35520 Melesse
(FR)**
Inventeur : **Chatel, Jean
8, Allée Emile Maurice
F-35000 Rennes (FR)**
Inventeur : **Letertre, Bernard
24, rue Bourbonnais Apt. 1502
F-35000 Rennes (FR)**

(74) Mandataire : **Mongrédien, André et al
c/o BREVATOME 25, rue de Ponthieu
F-75008 Paris (FR)**

## Description

La présente invention a pour objet un dispositif permettant le décodage des signaux composites de télévision en couleur, codés selon l'une quelconque des normes SECAM ou PAL. Ce dispositif comporte en particulier des moyens de séparation fine et précise des énergies de luminance et de chrominance contenues dans ces signaux.

L'invention s'applique en tout point de la chaîne de télévision où un décodage est nécessaire, à savoir, notamment, dans les équipements de production de télévision demandant une manipulation d'images sous forme de composantes séparées, dans les systèmes de visualisation, en particulier dans les téléviseurs grand public.

Le traitement s'effectuant sous forme numérique, la présente invention constitue une interface de qualité entre des signaux composites analogiques et des signaux en composantes séparées numérisés répondant en particulier à la norme de télévision numérique consignée dans l'avis 601 du CCIR. Elle s'applique, au même titre, au transcodage des signaux PAL ou SECAM en signaux à composantes analogiques multiplexées temporellement dits signaux MAC. Elle constitue également l'élément d'entrée des transcodeurs de signaux PAL en signaux SECAM et de signaux SECAM en signaux PAL.

Les techniques antérieurement utilisées pour le décodage des signaux SECAM et PAL sont de type analogique. Quelques versions numériques ont fait l'objet de publications pour les signaux PAL (voir l'article "Improvement of picture quality for NTSC and PAL systems by digital signal processing" publié dans IEEE TRANSACTIONS ON CONSUMER ELECTRONICS, Vol CE-31, n° 4, novembre 1985, pages 642 à 653). La plupart ne sont que la transposition des précédentes. Ces procédés conventionnels ont pour principal inconvénient de ne pas séparer correctement les énergies de luminance et de chrominance et de les considérer pratiquement comme si elles étaient à bandes séparées. Il en résulte que de l'énergie de luminance est interprétée comme de la couleur et réciproquement. Le signal de luminance restitué par ces systèmes possède en général une largeur de bande réduite.

Dans un article publié par J. SABATIER et J. CHATEL intitulé "Qualité des signaux de télévision en bande de base, 2ème partie : Evaluation des performances de diverses méthodes de décodage des signaux composites de TV couleur" publié dans la revue Radiodiffusion télévision" n°70, Nov. Déc. 1981, il est expliqué qu'il est possible de pallier ces inconvénients en utilisant les corrélations qui existent entre les sous-porteuses de chrominance de lignes consécutives, ou de trames consécutives, ou d'images consécutives. Pour les signaux PAL, des réalisations existent qui utilisent les relations des sous-porteuses entre lignes consécutives, mais c'est en utilisant les relations entre trames que le meilleur compromis est atteint. Avec les signaux SECAM, il est également possible de mettre à profit les corrélations inter-trames des sous-porteuses. Toutefois, les tentatives dont il a pu être fait état ne conduisent pas à des résultats satisfaisants, ou imposent d'effectuer une mise en forme appropriée du signal d'image avant codage SECAM, contrainte extrêmement difficile à satisfaire dans l'environnement de production actuel.

Le dispositif faisant l'objet de la présente invention comporte un ensemble de moyens de traitement numérique des signaux qui, sans réglages, permettent dans des conditions de performances élevées et stables :
   – le décodage de signaux SECAM
   – ou le décodage de signaux PAL et SECAM.

Ce dispositif permet notamment, pour ces deux types de signaux, une séparation fine et précise des énergies de luminance et de chrominance et une restitution maximale de la largeur de bande de la composante de luminance. Il optimise la restitution des composantes de différence de couleur.

Ces objectifs sont atteints avec des signaux PAL ou SECAM conventionnels, sans que ceux-ci aient eu à subir un quelconque prétraitement.

Le dispositif proposé pour la présente invention conduit, moyennant la mémorisation d'une trame d'image, à une séparation précise de la luminance et de la chrominance pour toutes les images comportant des détails fins verticaux ou légèrement obliques. On élimine dans ce type de situation les intermodulations entre luminance et chrominance et les phénomènes de fausse couleur associés.

Pour les détails horizontaux ou légèrement inclinés par rapport à cette orientation, une détection a posteriori de la présence de distorsions permet de conserver aux signaux décodés des caractéristiques optimales. Ces propriétés sont vérifiées pour des signaux issus tant d'un codage PAL que d'un codage SECAM.

En présence de détails fins dans une direction oblique, la possibilité d'intermodulations entre luminance et chrominance persiste. En SECAM toutefois, un moyen particulier du système permet, dans cette situation, de détecter une énergie de luminance supérieure à celle de la chrominance et de réduire l'effet de fausse couleur associé.

Le système faisant l'objet de la présente invention, comme revendiqué dans la revendication 1, traite sous forme numérique un signal analogique. Il comporte donc d'abord une interface analogique-numérique qui a pour fonction, d'une part, la numérisation du signal analogique et, d'autre part, l'extraction de ce signal de diverses informations utiles au fonctionnement du système telles que signaux de synchronisation, signaux de suppression, identification de standard PAL/SECAM, porte de salve, etc.

Cette interface engendre également les signaux d'horloge.

A la suite de cette interface, le système de traitement à proprement parler comporte essentiellement :

– un dispositif de filtrage permettant une séparation des énergies haute-fréquence (luminance + chrominance) et basse-fréquence (luminance) du signal composite reçu,

– un dispositif à mémoire de trame chargé de séparer le signal de chrominance de la partie haute fréquence du signal de luminance,

– un dispositif de reconstitution du signal de luminance qui reçoit la partie basse fréquence à laquelle est ajoutée tout ou partie de l'énergie haute fréquence estimée par le dispositif précédent ou un signal de correction de contour, lorsque cette dernière n'est pas utilisable,

– selon la version du système retenu, un ou deux dispositifs de démodulation du signal de chrominance associés à un filtre en cloche, des filtres de désaccentuation et des filtres passe-bas,

– un dispositif à mémoire de ligne permettant l'interpolation (en SECAM) ou le filtrage (en PAL) vertical des signaux de différence de couleur,

– des dispositifs de commutation selon le mode PAL/SECAM utilisé,

– un circuit de contrôle d'état de l'information extraite, assurant la commande des dispositifs de commutation ou de mélange qui permettent d'aiguiller vers la sortie l'information appropriée ; cet ensemble de moyens constituant la partie adaptative du système,

– un certain nombre de registres et d'éléments de retard permettant de garantir le synchronisme des différents traitement effectués.

De toutes façons, la présente invention sera mieux comprise à la lumière de la description qui va suivre, d'exemples de réalisation donnés à titre explicatif et nullement limitatif. Cette description se réfère à des figures annexées sur lesquelles :

– la figure 1 représente le principe de base d'un circuit de séparation des signaux de luminance et de chrominance,

– la figure 2 illustre deux modes particuliers de réalisation d'un circuit de filtrage,

– la figure 3 représente le dispositif de l'invention,

– la figure 4 montre une variante du dispositif précédent utilisant deux démodulateurs au lieu d'un,

– la figure 5 montre un exemple de réalisation d'un circuit de correction de contour,

– la figure 6 montre un exemple de structure d'un circuit mélangeur,

– la figure 7 montre un exemple de réalisation d'un circuit de détection-décision,

– la figure 8 montre deux modes de réalisation du circuit d'interpolation par filtrage vertical,

– la figure 9 montre un troisième mode de réalisation de ce circuit, qui combine les deux modes précédents,

– la figure 10 montre un mode de réalisation du circuit de traitement dans le cas d'un seul démodulateur,

– la figure 11 illustre la structure d'un double démodulateur utilisable dans l'invention.

Le dispositif proposé par la présente invention met à profit une propriété commune à tous les signaux composites, à savoir que les sous-porteuses de chrominance sur deux lignes adjacentes appartenant respectivement à deux trames consécutives sont en opposition de phase. Plus précisément, avec les systèmes PAL ou SECAM à 625 lignes, il y a opposition de phase entre la sous-porteuse de la ligne n et celle de la ligne n-312 appartenant à la trame précédente et située juste au dessous, sur l'image.

En associant les indices 1 et 2 à chacune des trames d'une image, les signaux composites sur chacune de celles-ci s'écrivent respectivement :

$$s_1 = Y_1 - Ch_1$$
$$s_2 = Y_2 + Ch_2$$

Y désigne la composante de luminance, Ch représente le signal de chrominance.

Du fait de la proximité spatiale et temporelle des lignes considérées, on peut, dans un premier temps, admettre qu'il y a peu de différence entre les informations $Y_1$ et $Y_2$ d'une part, $Ch_1$ et $Ch_2$ d'autre part.

Ceci étant, la demi-somme de $s_1$ et $s_2$ donne une estimation de la luminance, la demi-différence une estimation de la chrominance.

$$\frac{s_2 + s_1}{2} = \frac{Y_2 + Y_1}{2} + \frac{Ch_2 - Ch_1}{2} \simeq \frac{Y_1 + Y_2}{2}$$

$$\frac{s_2 - s_1}{2} = \frac{Ch_2 + CH_1}{2} + \frac{Y_2 - Y_1}{2} \simeq \frac{Ch_2 + Ch_1}{2}$$

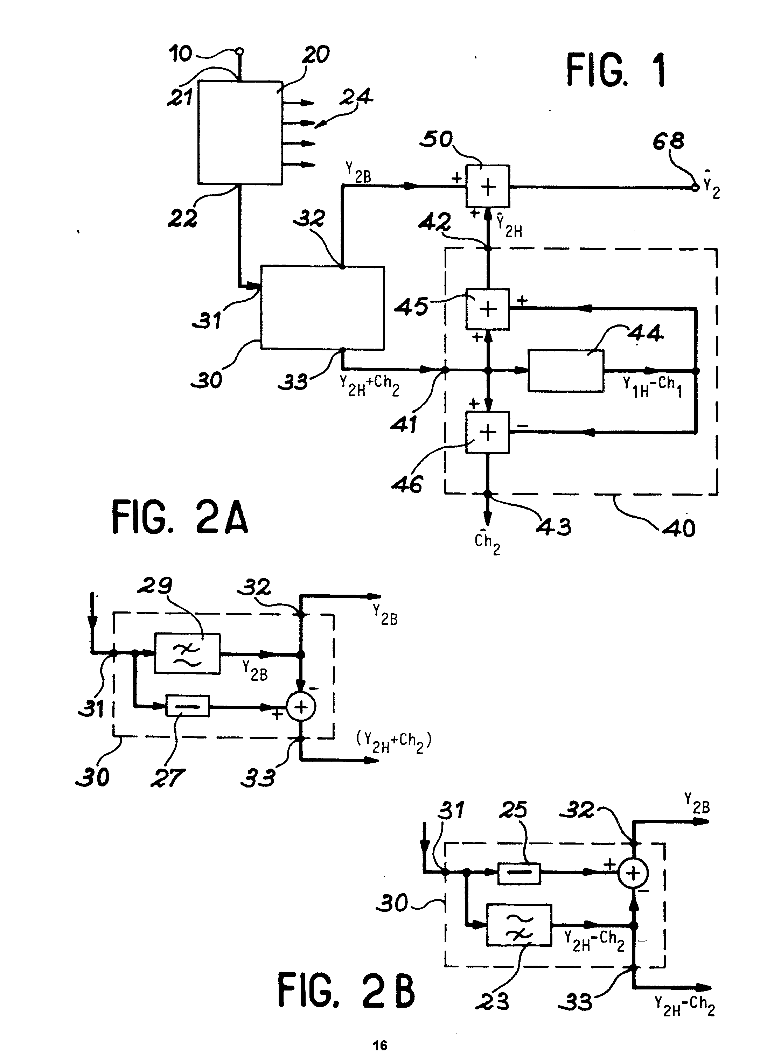

Le circuit de la figure 1 permet de mettre en oeuvre ce calcul. Tel que représenté ce circuit comprend :

– une entrée générale 10 recevant un signal analogique composite de type SECAM ou PAL, ce signal contenant une information de luminance et une information de chrominance,

– une interface analogique-numérique 20 ayant une entrée 21 reliée à l'entrée générale 10, une sortie de signal 22 délivrant un signal vidéo numérique composite, et des sorties annexes 24 délivrant divers signaux de gestion du dispositif,

– un circuit de filtrage 30 permettant une séparation des signaux à haute fréquence et à basse fréquence, ce circuit ayant une entrée 31 reliée à la sortie 22 de l'interface 20 et recevant le signal vidéo numérique, une première sortie 32 délivrant le signal de luminance basse fréquence $Y_{2B}$ et une seconde sortie 33 délivrant le signal de luminance haute fréquence ajouté au signal de chrominance $Y_{2H} + Ch_2$,

– un dispositif à mémoire de trame 40 possédant une entrée 41 reliée à la seconde sortie 33 du circuit de filtrage 30, une première sortie 42 délivrant un signal estimé de la luminance à haute fréquence $\hat{Y}_{2H}$ et une seconde sortie 43 délivrant un signal estimé de chrominance $\hat{Ch}_2$,

– un circuit de reconstitution du signal de luminance constitué par un additionneur 50 ayant une première entrée reliée à la première sortie 32 du circuit de filtrage 30, et une seconde entrée reliée à la première sortie 42 de la mémoire de trame 40, et une sortie reliée à une sortie générale 68 délivrant le signal de luminance reconstitué $\hat{Y}_2$.

Le dispositif à mémoire de trame 40 comprend une mémoire de trame proprement dite 44, un additionneur 45 et un additionneur-soustracteur 46 dont l'entrée inverseuse est reliée à la sortie de la mémoire de trame 44.

Le dispositif 30 de séparation des énergies haute fréquence et basse fréquence du signal peut être constitué d'un filtre passe-bas 29 ou d'un filtre coupe-bande et d'un élément de retard 27 comme représenté sur la figure 2A. Dans une autre forme de réalisation illustrée sur la figure 2B, ce dispositif comprend un filtre passe-bande ou un filtre passe-haut 23 et un élément de retard 25. Les largeurs de bande des filtres utilisés sont telles que le signal haute fréquence sélectionné a un encombrement spectral correspondant sensiblement à celui du signal de chrominance. Les filtres réalisés sont de type transversal et ont une réponse en phase parfaitement linéaire. Dans ce mode de réalisation, les éléments de retard représentés en 2A ou 2B font, en fait, partie intégrante du filtre.

Revenant au circuit de la figure 1, le fonctionnement est le suivant. Du fait de l'existence du dispositif 30 de séparation des énergies haute fréquence et basse fréquence du signal composite, les moyennes entre lignes de trames consécutives ne s'appliquent qu'à la partie haute fréquence du signal. La partie basse fréquence, qui ne comporte que de l'énergie de luminance, n'est pas affectée par ce traitement.

La mémoire de trame 44 reçoit le signal haute fréquence sélectionné par le dispositif 30 et le retarde de 312 lignes. On dispose ainsi de part et d'autre de cette mémoire de l'énergie luminance haute fréquence de chaque trame ($Y_{1H}$ et $Y_{2H}$) à laquelle s'ajoute ou se retranche le signal de chrominance correspondant.

L'additionneur 46 effectue la demi-différence entre les énergies haute-fréquence des deux trames consécutives et délivre une estimation $\hat{Ch}_2$ du signal de chrominance.

L'additionneur 45 effectue la demi-somme entre ces énergies et délivre une estimation $\hat{Y}_{2H}$ de l'énergie haute fréquence de luminance.

L'additionneur 50 reçoit, d'une part, l'énergie basse fréquence $Y_{2B}$ et d'autre part, l'estimation d'énergie haute fréquence $\hat{Y}_{2H}$ du signal de luminance et permet donc de reconstituer le signal de luminance avec une pleine largeur de bande $\hat{Y}_2$.

En fait, ce circuit présente des limites de performance qui tiennent aux imperfections des estimations faites de la luminance haute fréquence d'une part et de la chrominance d'autre part. On calcule en effet :

$$\hat{Y}_{2H} = \frac{Y_{2H} + Y_{1H}}{2} + \frac{Ch_2 - Ch_1}{2}$$

$$\hat{Ch}_2 = \frac{Ch_2 + Ch_1}{2} + \frac{Y_{2H} - Y_{1H}}{2}$$

Or :

– $\hat{Y}_2$ peut être entaché d'un résidu de chrominance éventuellement important en présence de transitions colorées horizontales ou obliques,

– $\hat{Ch}_2$ peut être, tant en PAL qu'en SECAM, entaché d'un résidu de luminance en présence de transitions de luminance obliques,

– en SECAM, la moyenne ($Ch_1$ +$Ch_2$ )/2 peut donner un signal de chrominance entaché de battements susceptibles de faire décrocher le démodulateur.

On peut préciser ces questions de la manière suivante :

### a) Cas du signal PAL :

En utilisant toujours les indices 1 et 2 pour identifier deux trames consécutives, et les indices B et H pour identifier les énergies à basse et haute fréquence, un signal PAL s'écrit :

– pour l'une des trames :

$\quad s_1 = Y_{1B} + Y_{1H} - U_1 \cos \omega t - V_1 \sin \omega t$

– pour la trame suivante :

$\quad s_2 = Y_{2B} + Y_{2H} + U_2 \cos \omega t + V_2 \sin \omega t$

L'énergie luminance hautre fréquence estimée par demi-somme de ces expressions s'écrit :

$$\hat{Y}_{2H} = \frac{Y_{2H} + Y_{1H}}{2} + (U_2 - U_1)\cos \omega t + (V_2 - V_1)\sin \omega t$$

Cette expression montre que l'écart $U_2$-$U_1$ ou $V_2$-$V_1$ est à l'origine d'intermodulation de la chrominance sur la luminance. En détectant cet écart ou sa forte probabilité, il est possible d'atténuer, voire d'éliminer l'énergie $\hat{Y}_{2H}$ ainsi erronnée.

### b) Cas du signal SECAM :

Dans le cas du système SECAM, le signal de chrominance étant modulé en fréquence, deux couleurs différentes se traduiront par des signaux de pulsations différentes. Deux types d'anomalies peuvent se produire selon que l'on a affaire à une transition oblique ou à une transition horizontale.

- Transition oblique :

Dans cette situation, on passe le long de chacune des lignes considérées d'une couleur $C_a$ à une couleur $C_b$, et donc d'une pulsation $\omega_a$ à une pulsation $\omega_b$. Du fait de la pente de la transition ce passage n'a toutefois pas lieu au même endroit sur chacune des lignes. De ce fait, en présupposant une opposition de phase entre sous porteuses pour la zone de couleur $C_a$, on a pour la zone de couleur $C_b$ un signal $\cos \omega_b$ sur une ligne et $\cos(\omega_b + \varphi)$ sur l'autre.

Il vient ainsi :
pour l'estimation de la chrominance :

$$\hat{Ch}_2 = \frac{Y_{2H} - Y_{1H}}{2} + \frac{1}{2}(\cos \omega_b + \cos(\omega_b + \varphi))$$

soit en supposant l'écart de luminance hautre fréquence faible :

$$\hat{Ch}_2 = \cos \frac{\varphi}{2} \cdot \cos(\omega_b + \frac{\varphi}{2})$$

pour l'estimation de la luminance hautre fréquence :

$$\hat{Y}_{2H} = \frac{Y_{2H} + Y_{1H}}{2} + \frac{1}{2}(\cos \omega_b - \cos(\omega_b + \varphi))$$

soit :

$$\hat{Y}_{2H} = \frac{Y_{2H} + Y_{1H}}{2} - \sin \frac{\varphi}{2} \cdot \sin(\omega_b + \frac{\varphi}{2})$$

Les expressions de $\hat{Y}_{2H}$ et $\hat{Ch}_2$ montrent qu'en présence de ce type de transition on a une perte d'amplitude de la sous-porteuse et une apparition d'un résidu de chrominance dans la luminance qui sont d'autant plus importants que la pente de la transition est faible. La connaissance de l'amplitude de la sous-porteuse permet de détecter ces phénomènes et d'apporter les palliatifs appropriés.

- Transition horizontale :

Dans cette hypothèse, chacune des lignes considérées porte une couleur différente et la sous porteuse y a une pulsation différente. La luminance haute fréquence y est nécessairement faible et il vient :

$$\hat{Ch}_2 = \frac{1}{2}(\cos\omega_1 + \cos\omega_2) = \cos(\frac{\omega_1 - \omega_2}{2}) \cdot \cos$$

$$(\frac{\omega_1 + \omega_2}{2})$$

$$\hat{Y}_{2H} = \frac{1}{2}(\cos\omega_2 - \cos\omega_1) = \sin(\frac{\omega_1 - \omega_2}{2}) \cdot$$

$$\sin(\frac{\omega_1 + \omega_2}{2})$$

La chrominance estimée a une pulsation correspondant à la moyenne des couleurs des deux lignes considérées. Elle est entachée de variations d'amplitude au rythme de la demi-différence des pulsations correspondantes. Le contrôle de cette amplitude permet de pallier le risque de mauvais fonctionnement du démodulateur lorsqu'elle devient trop faible et d'atténuer $Y_{2H}$ qui comporte d'autant plus de résidu de chrominance que l'amplitude de celle-ci devient faible.

Le dispositif de l'invention a justement pour but de masquer ces perturbations. L'effet d'intermodulation de la chrominance sur la luminance sera masqué en atténuant, voire en annulant, l'énergie haute fréquence erronée que l'on ajoute à la luminance basse-fréquence. On pourra éventuellement y substituer une part de l'énergie provenant d'un circuit correcteur de contour. L'énergie de chrominance parasite est estimée :

- en PAL, en évaluant à partir des différences de couleur démodulées la présence de transition horizontale,
- en SECAM, à partir des écarts d'amplitude entre la chrominance estimée et une référence.

Les intermodulations de la luminance sur la chrominance sont limitées aux situations où l'on est en présence de transitions de luminance obliques de forte amplitude. En SECAM, elles sont en outre atténuées par la présence d'un filtre de désaccentuation haute fréquence dit "filtre en cloche". En SECAM également, la détection d'une amplitude de chrominance supérieure à celle de la référence (donnée par la salve) indique la présence d'une forte énergie de luminance dans la chrominance. Il est alors possible d'atténuer le signal de différence de couleur de sortie, puisqu'on est, dans cette hypothèse, en présence de fausse couleur.

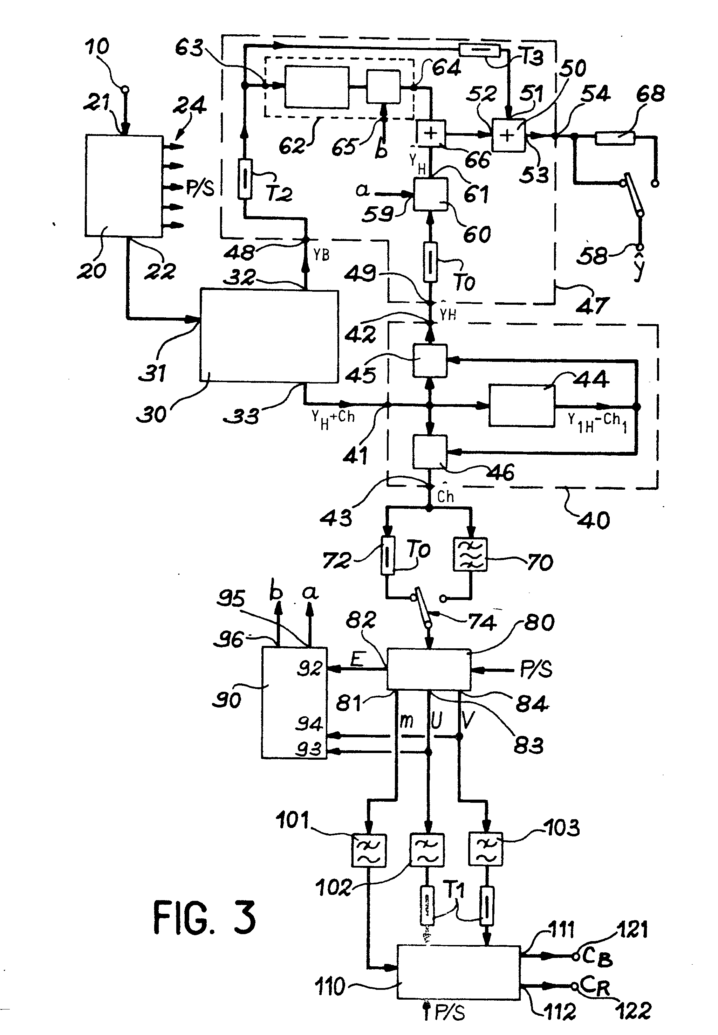

Le dispositif représenté sur la figure 3 permet d'obtenir tous ces résultats. Il comprend tout d'abord des moyens de reconstitution du signal de luminance 47 plus sophistiqués que ceux du circuit de la figure 1 (qui se réduisaient à l'additionneur 50) et, d'autre part, des moyens de traitement du signal de chrominance délivré par la mémoire de trame 40.

Le circuit de reconstitution du signal de luminance 47 comprend une première entrée 48, une seconde entrée 49 et une sortie 54. Il comprend par ailleurs :

- a) tout d'abord et comme sur la figure 1, un additionneur 50 possédant une première entrée 51 reliée à la première entrée 48 du circuit et recevant le signal de luminance basse fréquence YB, une seconde entrée 52 et une sortie 53,
- b) un circuit 60 de correction du signal de luminance YH par un facteur multiplicatif a, ce circuit ayant une entrée reliée à la seconde entrée 49 et une sortie 61, ce circuit ayant en outre une entrée de commande 59 recevant le facteur multiplicatif a,
- c) un circuit correcteur de contour 62 ayant une entrée 63 connectée à la première entrée 48 et une sortie 64 délivrant un signal qui est affecté d'un coefficient multiplicatif b, ce circuit ayant en outre une entrée de commande 65 recevant ce coefficient multiplicatif b,
- d) un additionneur 66 à deux entrées, l'une reliée à la sortie 61 du circuit de correction du signal de luminance 60 et l'autre à la sortie 64 du circuit correcteur de contour 62, et une sortie reliée à la première entrée 52 de l'additionneur 50.

Le dispositif de l'invention est en outre caractérisé par le fait qu'il comprend :

- un filtre de désaccentuation 70 en parallèle sur une ligne à retard 72, ce filtre et cette ligne étant connectés à la seconde sortie 43 du dispositif à mémoire de trame 40 et recevant le signal estimé de chrominance $\widehat{Ch}$,

- un dispositif de commutation 74 à deux positions permettant de mettre en circuit soit le filtre 70, soit la ligne à retard 72,

- un double démodulateur 80 ayant une entrée reliée au dispositif de commutation 74, ce double démodulateur 80 étant capable de démoduler des signaux numériques de type SECAM ou PAL, ce démodulateur 80 possédant une première sortie 81 délivrant un signal de démodulation m et une seconde sortie 82 délivrant l'amplitude $(\overline{E})$ de la sous-porteuse de chrominance dans le cas d'un signal SECAM, et possédant en outre une troisième et une quatrième sorties 83, 84 délivrant des signaux démodulés U et V dans le cas d'un signal PAL,

- un circuit de détection-décision 90 à trois entrées 92, 93, 94 reliées respectivement à la deuxième, la troisième et la quatrième sorties 82, 83, 84 du démodulateur 80, et recevant les signaux démodulés E, U et V, ce circuit possédant une première sortie 95 délivrant le coefficient multiplicatif $\underline{a}$ appliqué à l'entrée de commande 59 du circuit de correction 60 du signal de luminance $\widehat{YH}$ et une seconde sortie 96 délivrant le coefficient multiplicatif $\underline{b}$ appliqué à l'entrée 65 du circuit correcteur de contour 62,

- un dispositif 101 ayant la double fonction de filtrage passe-bas et de désaccentuation vidéo, ce dispositif étant relié à la première sortie 81 du double démodulateur 80 et recevant le signal $\underline{m}$, et deux filtres passe-bas 102, 103 reliés aux troisième (83) et quatrième (84) sorties du démodulateur 80 et recevant les signaux U et V,

- un circuit 110 d'interpolation par filtrage vertical ayant trois entrées reliées respectivement au dispositif 101 et aux deux filtres 102, 103 et recevant ainsi les signaux filtrés m, U et V et permettant d'effectuer une moyenne entre l'un des signaux U et V correspondant à une ligne et ce même signal retardé d'une ligne et une moyenne entre le signal $\underline{m}$ correspondant à une ligne et le signal $\underline{m}$ retardé de deux lignes, ce circuit 110 possédant deux sorties 111, 112,

- une deuxième et une troisième sorties générales 121, 122 reliées aux sorties 111 et 112 du circuit d'interpolation 110 et délivrant les signaux de différence de couleurs CB et CR.

Le fonctionnement de ce dispositif est le suivant.

Tout d'abord on retrouve la structure de base du dispositif de séparation luminance-chrominance déjà évoquée à propos de la figure 1, à savoir que l'interface analogique-numérique 20 est suivie d'un dispositif de séparation des énergies haute-fréquence et basse-fréquence 30 puis d'une mémoire de trame 40, moyennant quoi on obtient, en sortie des additionneurs 45 et 46, les signaux $\widehat{Y}_{2H}$ et $\widehat{Ch}_2$.

L'additionneur 50 reçoit toujours le signal de luminance basse fréquence $Y_{2B}$ mais il reçoit en outre un signal $a.Y_{2H}$, estimateur de luminance haute fréquence affecté d'un coefficient d'atténuation "a" compris entre zéro et l'unité. Lorsque l'estimation $Y_{2H}$ est jugée incorrecte (faibles valeurs de "a") on y substitue le signal issu du correcteur de contour 62 dans une proportion fixée par le coefficient "b". On décrira plus loin la structure d'un circuit correcteur de contour.

La sortie générale 58 est reliée à la sortie 54 soit directement, en PAL, soit par l'intermédiaire d'une ligne à retard 68, en SECAM, ceci afin que la luminance soit en coïncidence spatiale avec les différences de couleur $C_B$ et $C_R$.

Dans la version proposée sur la figure 3, la démodulation du signal de chrominance est effectuée sur l'estimation de la chrominance $\widehat{Ch}_2$. Ce signal subit en SECAM un filtrage de désaccentuation haute fréquence puis est appliqué au démodulateur de fréquence et d'amplitude 80. Ce démodulateur (dont on donnera plus loin un exemple de réalisation) délivre en PAL les deux différences de couleur U et V, en SECAM la différence de couleur démodulée m et l'amplitude E (ou une fonction de cette amplitude : $E^2$, $log_2E$) de la sous-porteuse de chrominance.

En PAL les différences de couleur obtenues à partir de $Ch_2$ sont aiguillées vers la sortie par l'intermédiaire d'un filtrage vertical 110 destiné à compenser les distorsions différentielles de phase, en ayant éventuellement subi un filtrage de réduction de bruit 102 et 103 et une compensation de retard PAL-SECAM (lignes à retard T1). Par ailleurs, les signaux U, V et E permettent de déterminer les coefficients a et b qui agissent sur l'énergie de luminance haute fréquence.

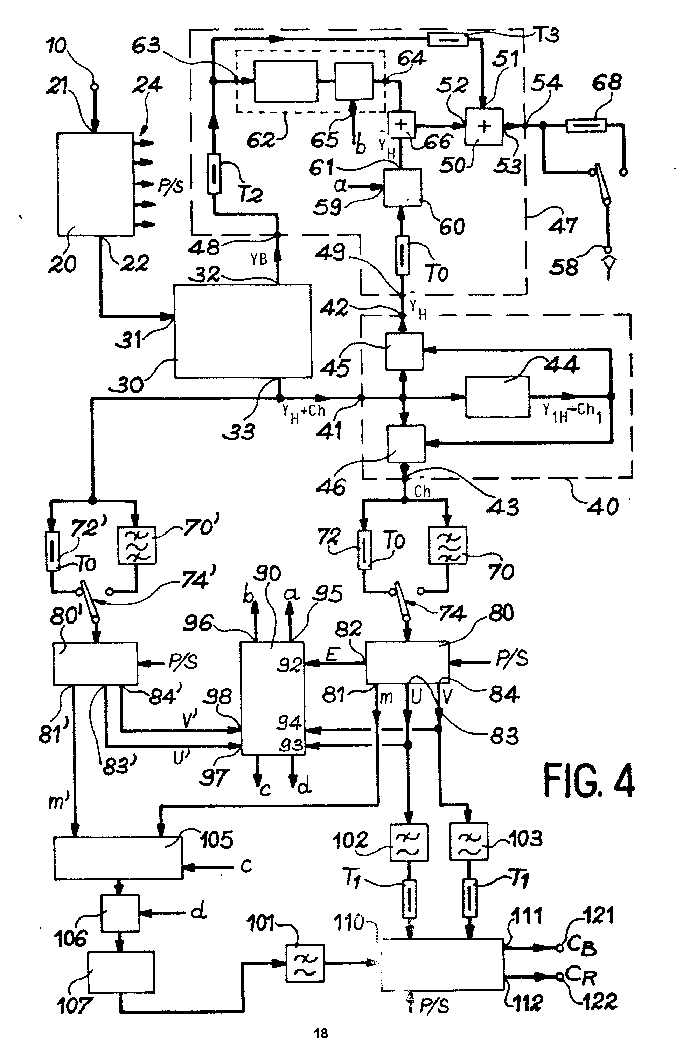

La figure 4 montre une variante de réalisation de l'invention qui utilise une deuxième voie de traitement.

De façon plus précise, le dispositif représenté comprend en outre :

- un second filtre de désaccentuation 70' en parallèle sur une ligne à retard 72', ce filtre et cette ligne étant connectés à la seconde sortie du circuit de filtrage 30 et recevant le signal de luminance et de chrominance haute fréquence YH+Ch,

– un second dispositif de commutation 74' à deux positions permettant de mettre en circuit soit le filtre 70', soit la ligne à retard 72',

– un second double démodulateur 80' ayant une entrée reliée au second dispositif de commutation 74', ce second démodulateur étant identique au premier 80 et délivrant sur une première sortie 81' un signal démodulé m' et délivrant sur une deuxième et une troisième sorties 83', 84' respectivement des signaux démodulés U' et V' dans le cas de signaux PAL,

– le circuit de détection-décision 90 comprenant alors une quatrième et une cinquième entrées 97, 98 reliées aux troisième et quatrième sorties 83', 84' du second double démodulateur 80' et une troisième et une quatrième sorties délivrant des coefficients c et d,

– un circuit mélangeur 105 possédant deux entrées reliées respectivement aux deux premières sorties 81, 81' des deux doubles démodulateurs 80, 80', une entrée de commande recevant le coefficient c et possédant une sortie délivrant un signal c.m+(1-c)m',

– un atténuateur 106 à une entrée de signal reliée à la sortie du circuit mélangeur 105 et à une entrée de commande recevant le coefficient d, cet atténuateur affectant le signal délivré par le mélangeur du coefficient multiplicatif d,

– un filtre de désaccentuation 107 ayant une entrée reliée à l'atténuateur 106 et une sortie reliée au dispositif de filtrage passe-bas 101.

En PAL, le dispositif 90 reçoit les signaux U et V, moyennes des différences de couleur intertrames et les compare aux différences de couleur de la trame courante U', V'. Un écart important entre ces grandeurs est significatif de la présence d'une transition horizontale pouvant conduire à un résidu de chrominance dans la luminance, auquel cas il convient d'agir sur $Y_{2H}$ et donc sur les coefficients a et b.

En SECAM, les démodulateurs 80 et 80' déterminent l'un le signal m, l'autre le signal m' auquel il est fait appel lorsque m est incorrect. Les signaux m et m' sont mélangés au moyen du circuit 105 selon la relation c.m+(1-c)m'. A la sortie de ce circuit le coefficient d peut permettre d'atténuer le signal dans l'hypothèse de forte intermodulation luminance-chrominance. Le signal résultant est ensuite désaccentué puis filtré avant d'attaquer le dispositif d'interpolation verticale 110. Les termes de l'adaptation (coefficients a, b, c, d) sont ici déterminés à partir de l'amplitude E du signal de chrominance $\hat{Ch}_2$.

Comme pour la variante de la figure 3 le dispositif de la figure 4 comporte par ailleurs un certain nombre de registres destinés à en assurer le synchronisme, ainsi que des éléments de retard $T_0$ destinés à compenser le temps de transit du signal dans le filtre en cloche 70. On a de même $T_2+T_3=T_0$. Il comporte également des dispositifs assurant la commutation entre les modes de fonctionnement PAL et SECAM (P/S). La détection du mode s'effectue dans le circuit d'entrée 20, l'une des sorties 24 délivrant un signal indiquant si le signal d'entrée est en PAL ou en SECAM.

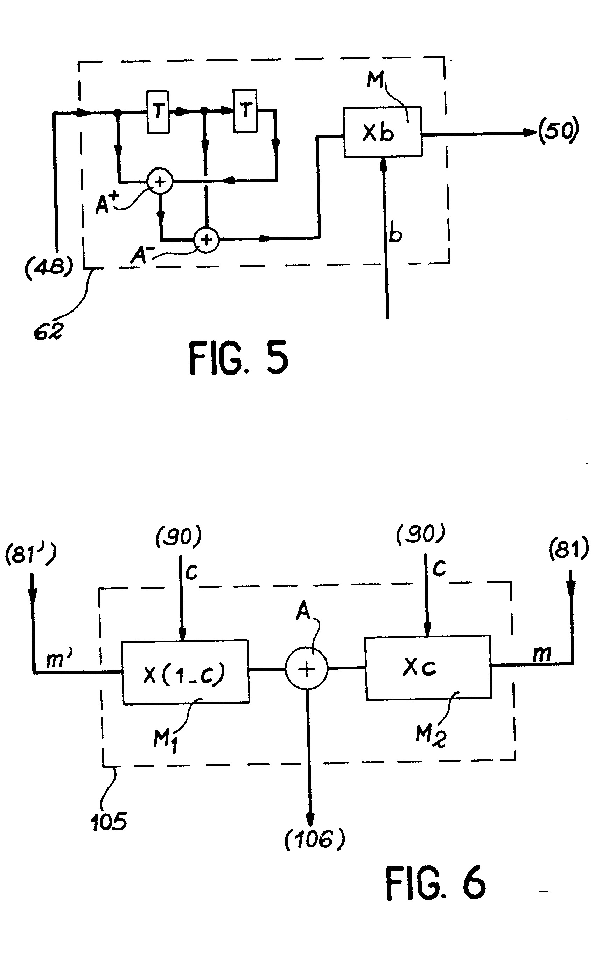

La figure 5 montre un exemple de réalisation du circuit correcteur de contour 62. Il comprend deux lignes à retard T, un additionneur A+ à deux entrées reliées l'une à l'entrée du circuit l'autre à la sortie de la seconde ligne à retard, et un additionneur soustracteur A-. La sortie de ce dernier est appliquée à un multiplieur M qui reçoit le coefficient b.

La figure 6 montre un exemple de réalisation du circuit mélangeur 105. Il comprend deux multiplieurs M1 et M2 recevant le paramètre c. Le premier reçoit le signal m' et effectue la multiplication par 1-c ; le second reçoit le signal m et effectue la multiplication par c. Le circuit comprend encore un additionneur A qui effectue la somme de m'(1-c) et mc.

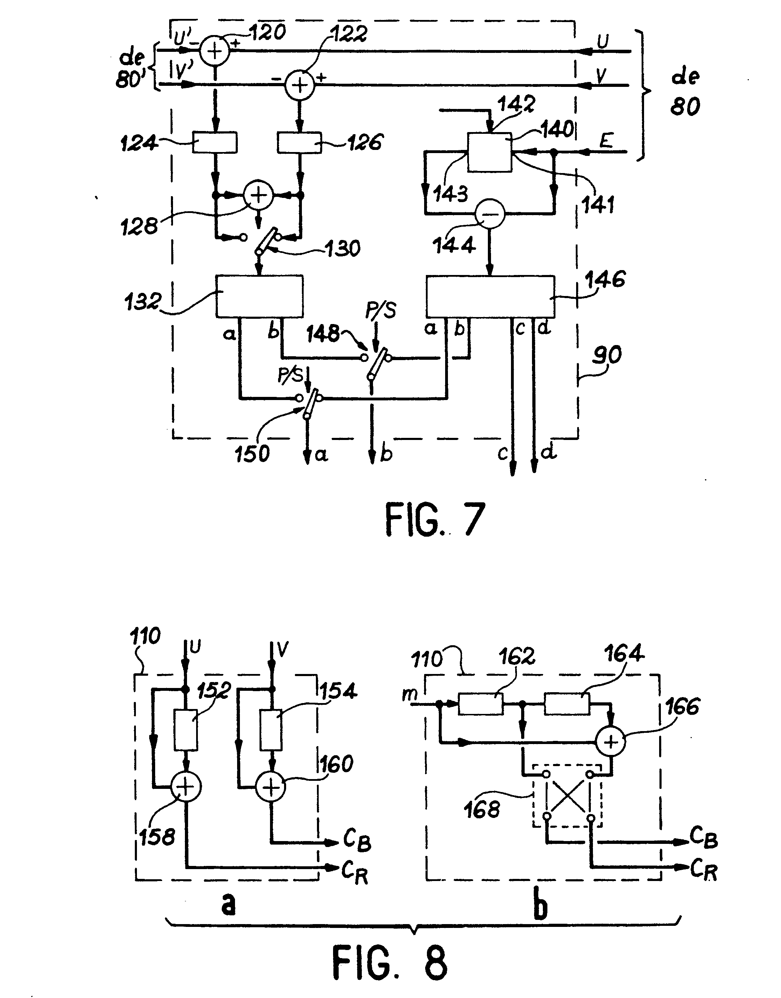

La figure 7 illustre un mode de réalisation du circuit 90 de détection-décision. Ce circuit comprend deux additionneurs-soustracteurs 120, 122 recevant respectivement les signaux U,V et U',V' par les doubles-démodulateurs 80, 80', deux circuits 124 et 126 reliés aux additionneurs-soustracteurs 120 et 122 et capables de délivrer la valeur absolue des différences U-U' et V-V', un comparateur 128 recevant les modules $|U-U'|$ et $|V-V'|$, le signe du signal de sortie de ce comparateur indiquant lequel de ces deux modules est le plus grand, un commutateur 130 commandé par la sortie du comparateur 128 et capable de sélectionner le module le plus élevé et de l'appliquer à une mémoire morte 132, laquelle délivre les coefficients a et b.

Cette partie du circuit correspond donc à un fonctionnement en PAL. Mais le circuit comprend en outre des moyens correspondant au mode SECAM, à savoir une mémoire 140, dont une première entrée 141 reçoit le module E du signal de chrominance (ou éventuellement le carré $E^2$ ou le logarithme $\log_2 E$ selon la structure du démodulateur 80), une seconde entrée 142 recevant un signal indiquant que l'on est en présence de la salve de référence (qui provient d'une des sorties 24 de l'interface 20). La mémoire possède une sortie 143 qui délivre un module de référence Eref. Le circuit comprend encore un soustracteur 144 recevant le module courant E et le module de référence Eref et délivrant l'écart entre E et Eref. Cet écart est appliqué à une mémoire morte 146 qui délivre les coefficients a, b, c et d. Des commutateurs 148 et 150 permettent de sélectionner les coefficients a, b délivrés soit par la mémoire 132 (cas du PAL) soit par la mémoire 146 (cas du SECAM).

La loi générale de variation des coefficients est la suivante :

– en mode de fonctionnement normal (estimation

correcte de Ch$_2$), on a :

a = 1, b = 0, c = 1, d = 1

– lorsqu'un écart est détecté entre U et U′ ou V et V′ ou lorsque E devient plus petit que Eref, a diminue, b augmente, c diminue,

– lorsque E devient plus grand que Eref, d diminue.

La figure 8a donne le schéma de principe du circuit de filtrage vertical 110 en PAL. Ce dispositif utilise, pour chaque différence de couleur U et V, une mémoire d'une ligne respectivement 152, 154 et un additionneur respectivement 158, 160 permettant de moyenner les signaux U et V présents aux entrées et sorties.

La figure 8b donne le schéma du même circuit pour les signaux SECAM. A la différence des décodeurs conventionnels, il utilise deux lignes de mémoire 162, 164 au lieu d'une et un additionneur 166, ce qui permet d'améliorer la qualité de la restitution de la différence de couleur manquante. En sortie de ce dispositif se trouve un circuit appelé permutateur 168 qui, de ligne à ligne, permet d'aiguiller la différence de couleur appropriée vers la sortie.

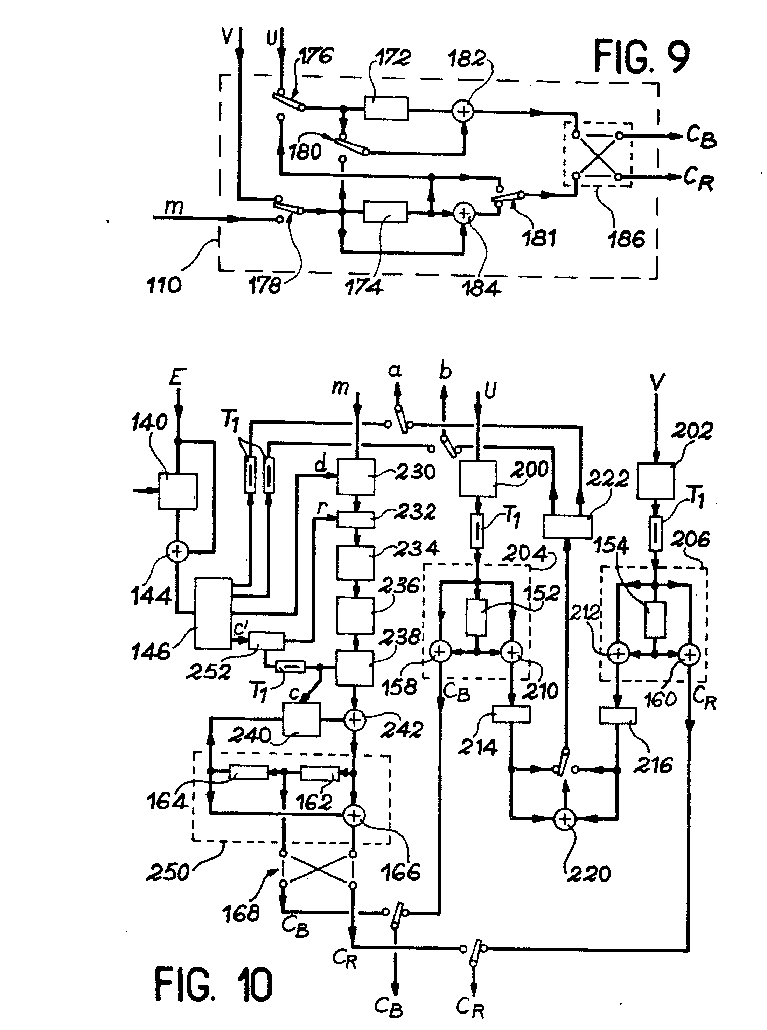

La figure 9 donne un exemple de circuit permettant d'utiliser les mêmes mémoires de lignes 172, 174 pour un fonctionnement en PAL ou en SECAM. Ces mémoires sont associées à des commutateurs 176, 178, 180, 181 et à des additionneurs 182, 184. Un permutateur 186 complète l'ensemble.

La figure 10 illustre un mode de réalisation des moyens situés en aval du démodulateur 80 et chargés, à partir de E, m, U et V, de délivrer les coefficients a, b, c et d permettant la correction adaptative et de délivrer les signaux de couleurs CB et CR. Dans ce mode de réalisation on retrouve, pour l'essentiel, des moyens déjà décrits à propos des figures 6, 7, 8. Ces moyens portent donc les mêmes références numériques. De façon plus précise, le sous-ensemble de la figure 10 comporte deux parties distinctes. L'une traite les composantes obtenues à partir d'un signal PAL (mode P), l'autre celles qui sont obtenues à partir d'un signal SECAM (mode S). Il reçoit les signaux U, V (en PAL) et m, E (en SECAM) issus du démodulateur 80 et délivre les deux différences de couleur C$_B$ et C$_R$ et les signaux a et b de contrôle de luminance haute fréquence.

En PAL, les composantes U et V sont éventuellement appliquées à des filtres passe-bas de réduction de bruit 200, 202 suivi d'un élément de retard T$_1$ destiné à compenser les différences de temps de transit dans le mode PAL et dans le mode SECAM. Les signaux sont ensuite appliqués à des dispositifs 204 et 206 qui comprennent une mémoire de ligne 152, 154 et effectuent d'une part, la moyenne entre signaux de lignes consécutives (additionneurs 158 et 160) et, d'autre part, la différence (soustracteurs 210, 212). La moyenne permet de compenser les distorsions différentielles de phase, la différence de détecter la présence de transitions horizontales sur l'image. Les modules de chacune des différences U-U′ et V-V′ sont calculés par des moyens 214, 216 puis comparés au moyen d'un comparateur 220 afin d'aiguiller le plus important des deux vers une mémoire morte 222 délivrant les signaux a et b de contrôle de luminance haute fréquence.

En SECAM, la composante démodulée m est appliquée à un atténuateur 230 qui en réduit l'amplitude en présence de forte intermodulation de la luminance sur la chrominance. Puis, après avoir traversé une mémoire 232, elle subit les filtrages de désaccentuation vidéo 234 et passe-bas 236. En sortie du basse-bas 236, le signal attaque un mélangeur composé des multiplieurs 238 et 240 et d'un additionneur 242, qui, en fonctionnement normal, le transmet dans son intégrité à un dispositif d'interpolation 250, et qui, lorsqu'un défaut de démodulation est détecté (signal c), lui substitue tout ou partie du signal démodulé deux lignes auparavant et présent à l'extrémité des éléments de retard 162 et 164 du dispositif d'interpolation 250. Le dispositif d'interpolation est identique à celui décrit pour la version précédente. Il est également suivi d'un permutateur 168 qui, de ligne à ligne, permet d'aiguiller vers chaque sortie la composante de différence de couleur qui convient.

La détection d'anomalie en SECAM se fait de la même façon que dans la version précédente à partir de l'amplitude E du signal de chrominance appliquée à la mémoire 140 et comparée à une référence prise pendant la durée de la salve. La mémoire morte 146 qui reçoit le résultat de cette comparaison, délivre les signaux a et b de contrôle de luminance haute fréquence, le signal d de détection de forte intermodulation de la luminance sur la chrominance, et un signal c′ significatif d'une perte d'amplitude de la sous-porteuse. Les signaux a, b, d, suivent la même loi que dans la précédente version. Le signal c′ permet, via un dispositif de retard à la prise de décision 252 de retarder pendant quelques périodes d'échantillonnage le moment où l'on autorise, par le coefficient c, la substitution du signal courant par le signal obtenu deux lignes plus tôt. Pendant ces quelques périodes un signal r interdit l'écriture de la mémoire 232 (qui est, en fait, un simple registre), de sorte qu'en sortie de celle-ci on répète le dernier échantillon obtenu sans anomalie. Ce dispositif, qui entre en jeu dès que la sous porteuse atteint un niveau faible (intérieur à 1/4 ou 1/8 de l'amplitude de référence), permet de donner pendant quelques périodes d'échantillonnage, avant l'issue desquelles la sous-porteuse peut revenir à un niveau plus élevé, la priorité à la répétition de l'information manquante dans la direction horizontale plutôt que dans la direction verticale.

L'ensemble du système représenté comporte par ailleurs des éléments de retard T$_1$ pour compenser le temps de traitement du signal démodulé en SECAM. Des registres sont par ailleurs disposés sur les différentes voies du système pour garantir le synchronisme du fonctionnement sur chacune d'elles.

Pour terminer, on va donner un exemple de réalisation d'un double démodulateur 80 (ou 80') qui permet, à partir d'une suite d'échantillons numériques décrivant le signal de chrominance, de donner le signal modulant $\underline{m}$ et l'amplitude E en SECAM, et les signaux modulant U et V en PAL.

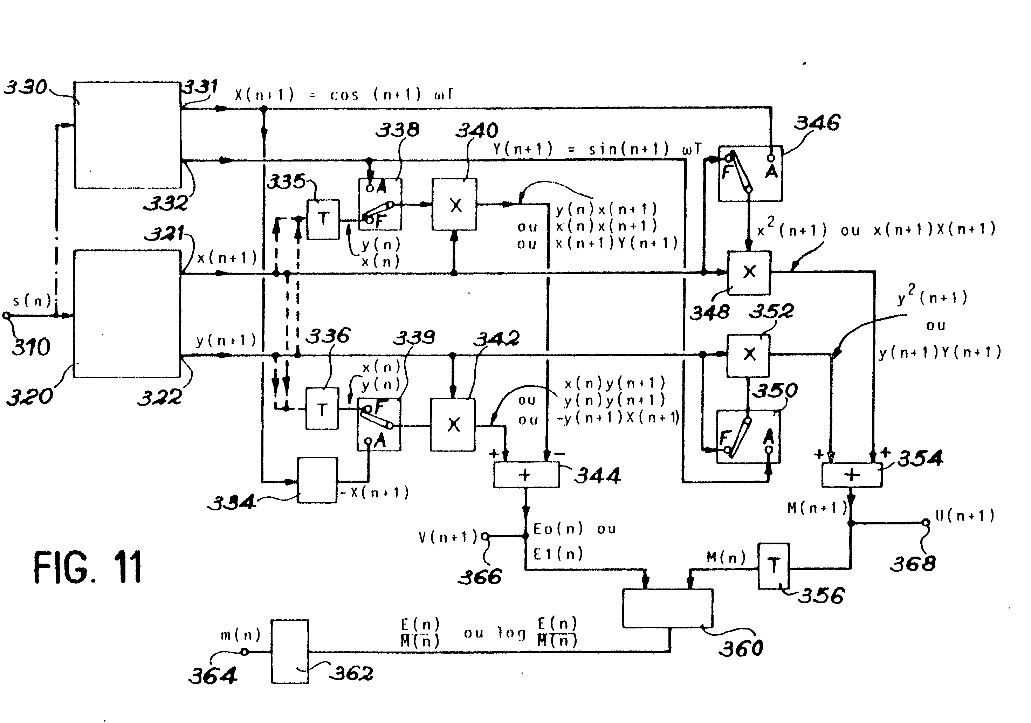

Tout type de démodulateur capable d'effectuer cette double démodulation est utilisable. Mais on préfère utiliser un double démodulateur tel que celui qui a fait l'objet de la demande de brevet français EN8603582 correspondant à FR-A-2 595 895 publié le 18.09.87. Ce double démodulateur est illustré sur la figure 11. Tel que représenté il comprend :

— une entrée générale 310 recevant les échantillons numériques s(n) du signal modulé, où $\underline{n}$ est le rang de l'échantillon,

— un transformateur de Hilbert 320 ayant une entrée reliée à l'entrée générale 310 et une première et une seconde sorties 321, 322 délivrant respectivement des échantillons en quadrature x(n+1) et y(n+1),

— un circuit de régénération de porteuse 330 ayant une entrée reliée à l'entrée générale 310 et une première et une seconde sorties 331, 332 délivrant des sous-porteuses en quadrature X(n+1) et Y(n+1),

— une première ligne à retard 335 reliée soit à la première sortie 321 du transformateur de Hilbert 320, soit à la seconde 322 et délivrant un échantillon retardé x(n) ou y(n) d'une période d'échantillonnage,

— une seconde ligne à retard 336 reliée soit à la seconde sortie 322 du transformateur de Hilbert 320, soit à la première 321 et délivrant un échantillon retardé y(n) ou x(n) d'une période d'échantillonnage,

— un premier dispositif de commutation 338 ayant une première entrée A reliée à la seconde sortie 332 du circuit de régénération de porteuse 330, une seconde entrée F reliée à la première ligne à retard 335 et une sortie,

— un second dispositif de commutation 339 ayant une première entrée A reliée, par l'intermédiaire d'un inverseur 334, à la première sortie 331 du circuit de régénération de porteuse 330, une seconde entrée F reliée à la seconde ligne à retard 336 et une sortie,

— un premier multiplieur 340 ayant une première entrée reliée à la sortie du premier dispositif de commutation 338 et recevant l'échantillon x(n) ou y(n+1) ou la sous-porteuse Y(n+1), et une seconde entrée reliée à la première sortie 321 du transformateur de Hilbert 320 et recevant l'échantillon x(n), ce premier multiplieur ayant une sortie délivrant l'un des produits y(n)x(n+1), x(n)x(n+1), x(n+1)Y(n+1),

— un second multiplieur 342 ayant une première entrée reliée à la sortie du second dispositif de commutation 339 et recevant l'échantillon y(n) ou x(n) ou la sous-porteuse X(n+1) et une seconde entrée reliée à la seconde sortie 322 du transformateur de Hilbert 320 et recevant l'échantillon y(n+1), ce second multiplieur 342 ayant une sortie délivrant l'un des produits x(n)y(n+1), y(n)y(n+1), -y(n+1)X(n+1),

— un premier additionneur 344 ayant une première entrée reliée à la sortie du premier multiplieur 340 et une seconde entrée pouvant être inverseuse et reliée à la sortie du second multiplieur 342, ce premier additionneur ayant une sortie délivrant un signal $E_o(n)$ ou $E_1(n)$ ou V(n+1),

— un troisième dispositif de commutation 346 ayant une première entrée F reliée à la première sortie 321 du transformateur de Hilbert 320 et une seconde entrée A reliée à la première sortie 331 du circuit de régénération de porteuse 330, et une sortie,

— un troisième multiplieur 348 ayant une première entrée reliée à la première sortie 321 du transformateur de Hilbert 320, une seconde entrée reliée à la sortie du troisième dispositif de commutation 346 et une sortie délivrant soit $x^2(n+1)$, soit x(n+1)X(n+1),

— un quatrième dispositif de commutation 350 ayant une première entrée F reliée à la seconde sortie 322 du transformateur de Hilbert 320, une seconde entrée reliée à la seconde sortie 332 du circuit de régénération de porteuse 330 et une sortie,

— un quatrième multiplieur 352 ayant une première entrée reliée à la seconde sortie 322 du transformateur de Hilbert 320, une seconde entrée reliée à la sortie du quatrième dispositif de commutation 350 et une sortie délivrant soit $y^2(n+1)$, soit y(n+1)Y(n+1),

— un second additionneur 354 ayant une première entrée reliée à la sortie du troisième multiplieur 348, une seconde entrée reliée à la sortie du quatrième multiplieur 352 et une sortie délivrant une quantité M(n+1), ou U(n+1),

— éventuellement une troisième ligne à retard 356 d'une période d'échantillonnage reliée au second additionneur 354 et délivrant le signal M(n),

— un circuit diviseur 360 ayant une première entrée reliée à la sortie du premier additionneur 344 et recevant un signal $E_o(n)$ ou $E_1(n)$, une seconde entrée reliée à la troisième ligne à retard 356 ou, si celle-ci n'existe pas, au second additionneur 354 et recevant le signal M(n) et une sortie délivrant un signal quotient de $E_o(n)$ ou $E_1(n)$ par M(n),

— un circuit 362 ayant une entrée adressée par le signal apparaissant à la sortie du circuit diviseur 360 et une sortie.

Un tel démodulateur est capable de démoduler :
– soit un signal s(n) modulé en fréquence par un signal modulant m(n), auquel cas les quatre dispositifs de commutation 338, 339,. 346, 350 sont dans la position qui relie leur sortie à leur première entrée F, le signal modulant m(n) étant alors disponible sur une sortie générale 364 reliée à la sortie du circuit 362,
– soit un signal à double modulation d'amplitude U(n), V(n) en quadrature et à porteuse supprimée, auquel cas les quatre dispositifs de commutation 338, 339, 346, 350 sont dans la position qui relie leur sortie à leur seconde entrée A, les signaux démodulés V(n+1) et U(n+1) étant disponibles sur deux sorties générales 366, 368 correspondant respectivement à la sortie du premier 344 et du second 354 additionneurs.

## Revendications

1. Dispositif de décodage numérique de signaux de télévision comprenant :
– une entrée générale (10) recevant un signal analogique composite de type SECAM ou PAL, ce signal contenant une information de luminance et une information de chrominance,
– une interface analogique-numérique (20) ayant une entrée (21) reliée à l'entrée générale (10), une sortie de signal (22) délivrant un signal vidéo numérique composite, et des sorties annexes (24) délivrant divers signaux de gestion du dispositif,
– un circuit de filtrage (30) permettant une séparation des signaux à haute fréquence et à basse fréquence, ce circuit ayant une entrée (31) reliée à la sortie (22) de l'interface (20) et recevant le signal vidéo numérique, une première sortie (32) délivrant le signal de luminance basse fréquence (YB) et une seconde sortie (33) délivrant un signal de luminance et un signal de chrominance haute fréquence (YH+Ch),
– un dispositif à mémoire de trame (40) possédant une entrée (41) reliée à la seconde sortie (33) du circuit de filtrage (30), une première sortie (42) délivrant un signal estimé de la luminance à haute fréquence (ŶH) et une seconde sortie (43) délivrant un signal estimé de chrominance Ĉh,
– un circuit de reconstitution du signal de luminance comportant une première entrée (48) reliée à la première sortie (32) du circuit de filtrage (30), une seconde entrée (49) reliée à la première sortie (42) de la mémoire de trame (40) et une sortie (54) reliée à une sortie générale (58) délivrant le signal de luminance reconstitué,
ce dispositif de décodage numérique étant caractérisé par le fait que le circuit de reconstitution du signal de luminance (47) comprend :

– a) un premier additionneur (50) possédant une première entrée (51) reliée à la première entrée (48) du circuit et recevant le signal de luminance basse fréquence YB, une seconde entrée (52) et une sortie (53), reliée à la sortie (54) du circuit de reconstitution du signal de luminance,
– b) un circuit (60) de correction du signal de luminance (YH) par une facteur multiplicatif $\underline{a}$, ce circuit ayant une entrée reliée à la seconde entrée (49) et une sortie (61), ce circuit ayant en outre une entrée de commande (59) recevant le facteur multiplicatif $\underline{a}$,
– c) une circuit correcteur de contour (62) ayant une entrée (63) connectée à la première entrée (48) et une sortie (64) délivrant un signal qui est affecté d'un coefficient multiplicatif $\underline{b}$, ce circuit ayant en outre une entrée de commande (65) recevant ce coefficient multiplicatif $\underline{b}$,
– d) un deuxième additionneur (66) à deux entrées, l'une reliée à la sortie (61) du circuit de correction du signal de luminance (60) et l'autre à la sortie (64) du circuit correcteur de contour (62), et une sortie reliée à la première entrée (52) du premier additionneur (50),
ce dispositif de décodage numérique étant en outre caractérisé par le fait qu'il comprend :
– un filtre de désaccentuation (70) en parallèle sur une ligne à retard (72), ce filtre et cette ligne étant connectés à la seconde sortie (43) du dispositif à mémoire de trame (40) et recevant le signal estimé de chrominance Ĉh,
– un dispositif de communication (74) à deux positions permettant de mettre en circuit soit le filtre (70), soit la ligne à retard (72),
– un double démodulateur (80) ayant une entrée reliée au dispositif de commutation (74), ce double démodulateur (80) étant capable de démoduler des signaux numériques de type SECAM modulés en fréquence ou de type PAL modulés en amplitude, ce démodulateur (80) possédant une première sortie (81) délivrant un signal de démodulation $\underline{m}$ et une second sortie (82) délivrant l'amplitude (E) de la sous-porteuse de chrominance dans le cas de signaux SECAM, et possédant en outre une troisième et une quatrième sorties (83, 84) délivrant des signaux démodulés U et V dans le cas de signaux PAL,
– un circuit de détection-décision (90) à trois entrées (92, 93, 94) reliées respectivement à la seconde, la troisième et la quatrième sorties (82, 83, 84) du démodulateur (80), et recevant les signaux démodulés E, U et V, ce circuit possédant une première sortie (95) délivrant le coefficient multiplicatif $\underline{a}$ appliqué à l'entrée de commande (59) du circuit de correction (60) du signal de luminance (YH) et une seconde sortie (96) délivrant le coefficient multiplicatif $\underline{b}$ appliqué

à l'entrée (65) du circuit correcteur de contour (62),

– un dispositif (101) ayant la double fonction de filtrage passe-bas et de désaccentuation vidéo, ce dispositif étant relié à la première sortie (81) du double démodulateur (80) et recevant le signal $\underline{m}$, et deux filtres passe-bas (102, 103) reliés aux troisième (83) et quatrième sorties du démodulateur (80) et recevant les signaux U et V,

– un circuit (110) d'interpolation par filtrage vertical ayant trois entrées reliées respectivement au dispositif (101) et aux deux filtres (102, 103) et recevant ainsi les signaux filtrés m, U et V et permettant d'effectuer une moyenne entre l'un des signaux U et V correspondant à une ligne et ce même signal retardé d'une ligne et une moyenne entre le signal m correspondant à une ligne et le signal m retardé de deux lignes, ce circuit (110) possédant deux sorties (111, 112),

– une deuxième et une troisième sorties générales (121, 122) reliées aux sorties (111) et (112) du circuit d'interpolation (110) et délivrant les signaux de différence de couleurs CB et CR.

2. Dispositif selon la revendication 1, caractérisé par le fait qu'il comprend en outre :

– un second filtre de désaccentuation (70') en parallèle sur une ligne à retard (72'), ce filtre et cette ligne étant connectés à la seconde sortie (33) du circuit de filtrage (30) et recevant le signal de luminance haute fréquence et de chrominance (YH+Ch),

– un second dispositif de commutation (74') à deux positions permettant de mettre en circuit soit le filtre (70'), soit la ligne à retard (72'),

– un second double démodulateur (80') ayant une entrée reliée au second dispositif de commutation (74'), ce second démodulateur étant identique au premier (80) et délivrant sur une première sortie (81') un signal démodulé m' dans le cas de signaux SECAM et délivrant sur une deuxième et une troisième sorties (83', 84') respectivement des signaux démodulés U' et V' dans le cas de signaux PAL,

– le circuit de détection-décision (90) comprenant alors une quatrième (97) et une cinquième (98) entrées reliées aux troisième et quatrième sorties (83', 84') du second double démodulateur (80') et une troisième et une quatrième sorties délivrant des coefficients $\underline{c}$ et $\underline{d}$,

– un circuit mélangeur (105) possédant deux entrées reliées respectivement aux deux premières sorties (81, 81') des deux doubles démodulateurs (80, 80'), une entrée de commande recevant le coefficient $\underline{c}$ et possédant une sortie délivrant un signal c.m+(1-c)m',

– un atténuateur (106) à une entrée de signal reliée à la sortie du circuit mélangeur (105) et à une entrée de commande recevant le coefficient $\underline{d}$, cet atténuateur affectant le signal délivré par le mélangeur du coefficient multiplicatif $\underline{d}$,

– un filtre de désaccentuation (107) ayant une entrée reliée à l'atténuateur (106) et une sortie reliée au dispositif de filtrage passe-bas et de désaccentuation (101).

3. Dispositif selon la revendication 1, caractérisé en ce que le circuit formé de la combinaison du circuit (110) d'interpolation et du circuit de détection - décision (90) comprend deux parties, la première traitant les composantes (U, V) obtenues à partir d'un signal PAL, la seconde traitant les composantes (E, m) obtenues à partir d'un signal SECAM, les signaux U, V et M, E étant issus du démodulateur (80), ce circuit ainsi formé délivrant les deux différences de couleur $C_B$ et $C_R$ et les signaux a et b de contrôle de luminance haute fréquence,

– la première partie, fonctionnant avec des signaux en PAL comprenant des filtres passe-bas de réduction de bruit (200, 202) suivis d'un élément de retard ($T_1$) destiné à compenser les différences de temps de transit dans le mode PAL et dans le mode SECAM, deux dispositifs (204, 206) qui comprennent une mémoire de ligne (152, 154) et qui effectuent, d'une part, la moyenne entre signaux de lignes consécutives par deux additionneurs (158 et 160) et, d'autre part, la différence par deux soustracteurs (210, 212), des moyens (214, 216) pour calculer les modules de chacune des différences U-U' et V-V', un comparateur (220) de ces deux différences et un aiguillage permettant d'aiguiller le plus important des deux modules vers une mémoire morte (222) délivrant les signaux $\underline{a}$ et $\underline{b}$ de contrôle de luminance haute fréquence,

– la seconde partie, fonctionnant avec des signaux SECAM, et comprenant un atténuateur (230) qui reçoit la composante m et en réduit l'amplitude en présence de forte intermodulation de la luminance sur la chrominance, une mémoire (232), des filtres de désaccentuation vidéo (234) et passe-bas (236), en sortie du filtre basse-bas (236) un mélangeur composé de deux multiplieurs (238, 240) et d'un additionneur (242), un dispositif d'interpolation (250) comprenant deux éléments de retard (162, 164), un permutateur (168),

les signaux $C_B$ et $C_R$ étant prelevés soit à la sortie des additionneurs (158, 160) de la première partie dans le cas de signaux PAL, soit à la sortie du permutateur (168) de la seconde partie, dans le cas de signaux SECAM.

**Patentansprüche**

1. Einrichtung zum digitalen Dekodieren von Fernsehsignalen mit:

– einem Haupteingang (10), der ein analoges Signal des SECAM- oder PAL-Typs empfängt, wobei dieses Signal eine Helligkeits- und eine Farbinformation enthält,

– einer Analog/Digital-Schnittstelle (20), die einen mit dem Haupteingang (10) verbundenen Eingang (21) und einen Signalausgang (22), der ein digitales Bildsignalgemisch abgibt, und Nebenausgänge (24) hat, die verschiedene Steuersignale für die Vorrichtung abgeben,

– einem Filterschaltkreis (30), der eine Trennung der hochfrequenten und niedrigfrequenten Signale gestattet, wobei dieser Schaltkreis einen Eingang (31), der mit dem Ausgang (22) der Schnittstelle (20) verbunden ist und das digitale Bildsignal empfängt, einen ersten Ausgang (32), der das niedrigfrequentes Helligkeitssignal (YB) abgibt, und einen zweiten Ausgang (33) hat, der ein hochfrequentes Helligkeitssignal und ein hochfrequentes Farbartsignal (ŶH+Ch) abgibt,

– einer Einschreibspeichereinrichtung (40) mit einem Eingang (41), der mit dem zweiten Ausgang (33) des Filterkreises (30) verbunden ist, mit einem ersten Ausgang (42), der ein hochfrequentes abgeschätztes Helligkeitssignal (YH) abgibt, und ein zweiter Ausgang (43), der ein abgeschätztes Farbartsignal Ĉh abgibt,

– einem Helligkeitssignal-Wiederherstellungsschaltkreis mit einem ersten Eingang (48), der mit dem ersten Ausgang (32) des Filterkreises (30) verbunden ist, mit einem zweiten Eingang (49), der mit dem ersten Ausgang (42) des Einschreibspeichers (40) verbunden ist, und mit einem Ausgang (54), der mit einem, das wiederhergestellte Helligkeitssignal abgebenden Hauptausgang (58) verbunden ist,

wobei diese Vorrichtung zum digitalen Dekodieren dadurch **gekennzeichnet** ist, daß der Helligkeitssignal-Wiederherstellungsschaltkreis (47) aufweist:

– a) einen ersten Addierer (50) mit einem ersten Eingang (51), der mit einem ersten Eingang (48) des Schaltreises verbunden ist und das niedrigfrequente Helligkeitssignal YB empfängt, mit einem zweiten Eingang (52) und einem Eingang (53), der mit dem Ausgang (54) des Helligkeitssignal-Wiederherstellungsschaltkreises verbunden ist,

– b) einen Schaltkreis (60) um das Helligkeitssignal (YH) um einen Multiplikationskoeffizienten a zu korrigieren, wobei dieser Schaltkreis einen mit dem zweiten Eingang (49) verbundenen Eingang und einen Ausgang (61) aufweist, wobei dieser Schaltkreis zudem einen Steuereingang (59) hat, der den Multiplikationskoeffizienten a empfängt,

– c) einen Konturkorrekturschaltkreis (62) mit einem mit dem ersten Eingang (48) verbundenen Eingang (63) und einem Ausgang (64), der ein Signal abgibt, das durch einen Multiplikationskoeffizienten b beeinflußt ist, wobei dieser Schaltkreis außerdem einen Steuereingang (65) hat, der den Multiplikationskoeffizienten b empfängt,

– d) einen zweiten Addierer (66) mit zwei Eingängen, von denen einer mit dem Ausgang (61) des Helligkeitssignal-Korrekturschaltkreises (60) und der andere mit dem Ausgang (64) des Konturkorrekturschaltkreises (62) verbunden ist, und mit einem mit dem ersten Eingang (52) des ersten Addierers (50) verbundenen Ausgang,

wobei diese Vorrichtung zum digitalen Dekodieren des weiteren dadurch **gekennzeichnet** ist, daß sie aufweist:

– einen parallel zu einer Verzögerungsleitung (72) angeordneten Nachentzerrungsfilter (70), wobei der Filter und die Leitung mit dem zweiten Eingang (43) der Einschreibspeichereinrichtung (40) verbunden sind und das abgeschätzte Farbartsignal Ĉh empfangen,

– eine Zwei-Positions-Umschalteinrichtung (74), die es erlaubt, entweder den Filter (70) oder die Verzögerungsleitung (72) in den Schaltkreis zu schalten,

– einen Zweifach-Demodulator (80) mit einem mit der Umschalteinrichtung (74) verbundenen Eingang, wobei der Zweifach-Demodulator (80) digitale frequenzmodulierte Signale des SECAM-Typs und amplitudenmodulierte Signale des PAL-Typs demodulieren kann, wobei dieser Demodulator (80) einen ersten, ein Demodulationssignal m abgebenden Eingang (81) und einen zweiten Ausgang (82), der bei SECAM-Signalen die Amplitude (E) des Farbhilfsträgers liefert, und außerdem einen dritten und vierten Ausgang (83, 84) aufweist, die bei PAL-Signalen die demodulierten Signale U und V liefern,

– einen Detektor-Entscheidungs-Schaltkreis (90) mit drei Eingängen (92, 93, 94), die jeweils mit dem zweiten, dritten und vierten Eingang (82, 83, 84) des Demodulators (80) verbunden sind und die demodulierten Signale E, U und V empfangen, wobei der Schaltkreis einen ersten Ausgang (95), der den an dem Steuereingang (59) des Korrekturkreises (60) für das Helligkeitssignal (YB) anliegenden Multiplikationskoeffizienten a liefert, und einen zweiten Ausgang (96) hat, der den an dem Eingang (65) des Konturkorrekturschaltkreises (62) anliegenden Multiplikationskoeffizienten b liefert,

– eine Einrichtung (101) mit der Doppelfunktion eines Tiefpaßfilters und eines Bild-Nachentzerrungsfilters, welche mit dem ersten Eingang (81) des Zweifach-Demodulators (80) verbunden ist und das Signal m empfängt, und zwei Tiefpaßfilter (102, 103), die mit dem dritten (83) und vierten Ausgang des Demodulators (80) verbunden sind und die Signale U und V empfangen,

– einen Schaltkreis (110) zur Interpolation durch vertikales Filtern, der drei Eingänge hat, die jeweils mit der Einrrichtung (101) und den beiden Filtern (102, 103) verbunden sind und also die gefilterten Signale m, U und V empfangen und die Bildung eines Mittelwertes zwischen den einer Zeile entsprechenden Signalen U und V und eben diesem um eine Zeile verzögerten Signal und eines Mittelwertes zwischen dem einer Zeile entsprechenden Signal m und dem um zwei Zeilen verzögerten Signal m ermöglichen, wobei der Schaltkreis (110) zwei Ausgänge (111, 112) aufweist,

– einen zweiten und dritten Hauptausgang (121, 122), die mit den Ausgängen (111) und (112) des Interpolationsschaltkreises (110) verbunden sind und die Farbdifferenzsignale CB und CR abgeben.

2. Vorrichtung nach Anspruch 1, **dadurch gekennzeichnet, daß** sie zudem aufweist:

– ein zweites zu einer Verzögerungsleitung (72') paralleles Nachentzerrungsfilter (70'), wobei dieses Filter und diese Leitung mit dem zweiten Ausgang (33) des Filterkreises (30) verbunden sind und das hochfrequente Helligkeitssignal und das Farbartsignal (XH+Ch) empfangen,

– eine zweite Zwei-Positions-Umschalteinrichtung (74'), die es ermöglicht, entweder den Filter (70') oder die Verzögerungsleitung (72') in den Schaltkreis zu schalten,

– einen zweiten Zweifach-Demodulator (80') mit einem Eingang, der mit der zweiten Umschalteinrichtung (74') verbunden ist, wobei der zweite Demodulator mit dem ersten (80) identisch ist und an einem ersten Ausgang (81') ein demoduliertes Signal m' im Falle von SECAM-Signalen und an einem zweiten und dritten Ausgang (83', 84') jeweils demodulierte Signale U' und V' im Falle von PAL-Signalen abgibt,

– wobei der Detektor-Entscheidungs-Schaltkreis (90) nun einen vierten (97) und fünften (98) Eingang, die mit dem zweiten und dritten Eingang (83', 84') des zweiten Zweifach-Demodulators (80') verbunden sind, und einen dritten und vierten Ausgang, die die Koeffizienten $c$ und $d$ abgeben, aufweist,

– einem Mischschaltkreis (105) mit zwei Eingängen, die jeweils mit den zwei ersten Ausgängen (81, 81') der zwei Zweifach-Demodulatoren (80, 80') verbunden sind, wobei ein Steuereingang den Koeffizenten $c$ empfängt und einen ein Signal $c.m+(1-c)m'$ abgebenden Ausgang aufweist,

– ein Dämpfungsglied (106) mit einen Signaleingang, der mit dem Ausgang des Mischschaltkreises (105) und mit einem den Koeffizienten $d$ empfangenden Steuereingang verbunden ist, wobei das Dämpfungsglied das von dem Mischschaltkreis für den Multiplikationskoeffizienten $d$ abgegebene Signal beeinflußt,

– einen Nachentzerrungsfilter (107) mit einem Eingang, der mit dem Dämpfungsglied (106) verbunden ist, und mit einem Ausgang, der mit der Tiefpaßfilter- und Nachentzerrungs-Einrichtung (101) verbunden ist.

3. Vorrichtung nach Anspruch 1, **dadurch gekennzeichnet, daß** der Schaltkreis, der aus der Kombination des Interpolationsschaltkreises (110) und des Detektor-Entscheidungs-Schaltkreises (90) gebildet wird, zwei Teile aufweist, von denen der erste die infolge eines PAL-Signals erhaltenen Komponenten (U, V) verarbeitet, während der zweite die infolge eines SECAM-Signals erhaltenen Komponenten (E, m) verarbeitet, wobei die Signale U, V und M, E vom Demodulator (80) abgegeben werden, wobei der wie oben gebildete Schaltkreis die beiden Farbdifferenzen $C_B$ und $C_R$ und die hochfrequenten Helligkeitssteuersignale a und b abgibt,

– wobei der erste Teil, der mit den PAL-Signalen arbeitet, Rauschminderungs-Tiefpaßfilter (200, 202) mit nachgeschaltetem Verzögerungsglied ($T_1$) zum Ausgleichen der Übertragungszeitunterschiede im PAL-Betrieb und im SECAM-Betrieb und zwei Vorrichtungen (204, 206), die einen Zeilenspeicher (152, 154) umfassen und die einerzeits eine Mittelwertbildung zwischen den aufeinanderfolgenden Zeilensignalen durch zwei Addierer (158 und 160) und andererseits eine Differenzbildung durch zwei Subtrahierer (210, 212) bewirkt, Einrichtungen (214, 216) zum Berechnen der Module jedes der Differenzwerte U-U' und V-V', einen Vergleicher (220) für die zwei Differenzwerte und eine Weiche aufweist, die es ermöglicht, das wichtigste der beiden Module zu einem Festwertspeicher (222) zu leiten, der die hochfrequenten Helligkeitssteuersignale $\underline{a}$ und $\underline{b}$ abgibt,

– wobei der zweite Teil, der mit den SECAM-Signalen arbeitet, auch ein Dämpfungsglied (230), das die Konstante m empfängt und damit die bei starker Intermodulation der Helligkeit und des Farbtons vorhandene Amplitude vermindert, einen Speicher (232), Bild-Nachentzerrungsfilter (234) und Tiefpaßfilter (236), am Ausgang des Tiefpaßfilters (236) einen aus zwei Multiplizierern (238, 240) und einem Addierer (242) bestehenden Mischschaltkreis, eine zwei Verzögerungsglieder (162, 164) aufweisende Interpolationseinrichtung (250) und einen Kreuzumschalter (168) aufweist, wobei die Signale $C_B$ und $C_R$ entweder am Ausgang der Addierer (158, 160) des ersten Teils im Falle von PAL-Signalen oder am Ausgang des Kreuzumschalters (168) des zweiten Teils im Falle von SECAM-Signalen abgegriffen werden.

## Claims

1. Television signal digital decoding device comprising:

 – a general input (10) receiving a composite analogue signal of SECAM or PAL type, this signal containing luminance information and chrominance information,

 – an analogue/digital interface (20) having an input (21) connected to the general input (10), a signal output (22) delivering a composite digital video signal, and ancillary outputs (24) delivering various signals for operating the device,

 – a filtering circuit (30) enabling a separation of the high-frequency and low-frequency signals, this circuit having an input (31) connected to the output (22) of the interface (20) and receiving the digital video signal, a first output (32) delivering the low-frequency luminance signal (YB) and a second output (33) delivering a luminance signal and a high-frequency chrominance signal (YH+Ch),

 – a frame-storing device (40) possessing an input (41) connected to the second output (33) of the filtering circuit (30), a first output (42) delivering an estimated high-frequency luminance signal (ŶH) and a second output (43) delivering an estimated chrominance signal Ĉh,

 – a circuit for reconstructing the luminance signal comprising a first input (48) connected to the first output (32) of the filtering circuit (30), a second input (49) connected to the first output (42) of the frame store (40) and an output (54) connected to a general output (58) delivering the reconstructed luminance signal,

this digital decoding device being characterised in that the circuit (47) for reconstructing the luminance signal comprises:

 – a) a first adder (50) possessing a first input (51) connected to the first input (48) of the circuit and receiving the low-frequency luminance signal YB, a second input (52) and an output (53) which is connected to the output (54) of the circuit for reconstructing the luminance signal,

 – b) a circuit (60) for correcting the luminance signal (YH) through a multiplicative factor a, this circuit having an input connected to the second input (49) and an output (61), this circuit furthermore having a command input (59) receiving the multiplicative factor a,

 – c) a contour-correcting circuit (62) having an input (63) connected up to the first input (48) and an output (64) delivering a signal which is modified by a multiplicative coefficient b, this circuit furthermore having a command input (65) receiving this multiplicative coefficient b,

 – d) a second adder (66) with two inputs, one connected to the output (61) of the circuit (60) for correcting the luminance signal, and the other to the output (64) of the contour-correcting circuit (62), and an output connected to the first input (52) of the first adder (50),

the digital decoding device furthermore being characterised in that it comprises:

 – a de-emphasising filter (70) in parallel with a delay line (72), this filter and this line being connected up to the second output (43) of the frame-storing device (40) and receiving the estimated chrominance signal Ĉh,

 – a commutation device (74) with two positions enabling either the filter (70), or the delay line (72) to be brought into circuit,

 – a double demodulator (80) having an input connected to the commutation device (74), this double demodulator (80) being capable of demodulating frequency-modulated SECAM type, or amplitude-modulated PAL type digital signals, this demodulator (80) possessing a first output (81) delivering a demodulating signal m and a second output (82) delivering the amplitude (E) of the chrominance subcarrier in the case of SECAM signals, and furthermore possessing a third and a fourth output (83, 84) delivering demodulated signals U and V in the case of PAL signals,

 – a detection/decision circuit (90) with three inputs (92, 93, 94) connected respectively to the second, the third and the fourth outputs (82, 83, 84) of the demodulator (80), and receiving the demodulated signals E, U and V, this circuit possessing a first output (95) delivering the multiplicative coefficient a applied to the command input (59) of the circuit (60) for correcting the luminance signal (YH), and a second output (96) delivering the multiplicative coefficient b applied to the input (65) of the contour-correcting circuit (62),

 – a device (101) having the double function of low-pass filtering and of video de-emphasising, this device being connected to the first output (81) of the double demodulator (80) and receiving the signal m, and two low-pass filters (102, 103) connected to the third (83) and fourth outputs of the demodulator (80) and receiving the signals U and V,

 – a circuit (110) for interpolation by vertical filtering, having three inputs connected respectively to the device (101) and to the two filters (102, 103) and thus receiving the filtered signals m, U and V and enabling a mean to be effected between one of the signals U and V corresponding to a line, and this same signal delayed by one line, and a mean between the signal m corresponding to a line and the signal m delayed by two lines, this circuit (110) possessing two outputs (111, 112),

 – a second and a third general output (121, 122) connected to the outputs (111) and (112) of the

interpolation circuit (110) and delivering the CB and CR colour difference signals.

2. Device according to Claim 1, characterised in that it furthermore comprises:

– a second de-emphasising filter (70') in parallel with a delay line (72'), this filter and this line being connected up to the second output (33) of the filtering circuit (30) and receiving the high-frequency luminance and chrominance (YH+Ch) signal,

– a second commutation device (74') with two positions, enabling either the filter (70'), or the delay line (72') to be brought into circuit,

– a second double demodulator (80') having an input connected to the second commutation device (74'), this second demodulator being identical with the first (80) and delivering to a first output (81') a demodulated signal m' in the case of SECAM signals and delivering to a second and a third output (83', 84') respectively demodulated signals U' and V' in the case of PAL signals,

– the detection/decision circuit (90) then comprising a fourth (97) and a fifth (98) input which are connected to the third and fourth outputs (83', 84') of the second double demodulator (80') and a third and a fourth output delivering coefficients $\underline{c}$ and $\underline{d}$,

– a mixer circuit (105) possessing two inputs connected respectively to the two first outputs (81, 81') of the two double demodulators (80, 80'), a command input receiving the coefficient $\underline{c}$ and possessing an output delivering a signal c.m̄+(1-c)m',

– an attenuator (106) with a signal input connected to the output of the mixer circuit (105) and with a command input receiving the coefficient $\underline{d}$, this attenuator modifying, by the multiplicative coefficient $\underline{d}$, the signal delivered by the mixer,

– a de-emphasising filter (107) having an input connected to the attenuator (106) and an output connected to the low-pass filtering and de-emphasising device (101).

3. Device according to Claim 1, characterised in that the circuit formed by the combination of the interpolation circuit (110) and the detection/decision circuit (90) comprises two parts, the first processing the components (U, V) obtained from a PAL signal, the second processing the components (E, m) obtained from a SECAM signal, the signals U, V and M, E coming from the demodulator (80) this circuit thus formed delivering the two colour differences $C_B$ and $C_R$ and the high-frequency luminance control signals a and b,

– the first part, functioning with PAL signals comprising low-pass noise-reducing filters (200, 202) followed by a delay element ($T_1$) intended to compensate for the differences of transit time in the PAL mode and in the SECAM mode, two devices (204, 206) which comprise a line store (152, 154) and which effect, on the one hand, the mean between consecutive-line signals through two adders (158 and 160) and, on the other hand, the difference through two subtracters (210, 212), means (214, 216) for calculating the moduli of each of the differences U-U' and V-V', a comparator (220) of these two differences and a switch enabling the larger of the two moduli to be switched to a read-only memory (222) delivering the high-frequency luminance control signals $\underline{a}$ and $\underline{b}$,

– the second part, functioning with SECAM signals, and comprising an attenuator (230) which receives the component m and reduces the amplitude thereof in the presence of strong intermodulation of the luminance with the chrominance, a memory (232), video de-emphasising (234) and low-pass (236) filters, at the output of the low-pass filter (236) a mixer composed of two multipliers (238, 240) and an adder (242), an interpolation device (250) comprising two delay elements (162, 164), a changeover (168),

the signals $C_B$ and $C_R$ being sampled either at the output of the adders (158, 160) of the first part in the case of PAL signals, or at the output of the changeover (168) of the second part, in the case of SECAM signals.

FIG. 1

FIG. 2A

FIG. 2 B

FIG. 3

FIG. 4

FIG. 5

FIG. 6

FIG. 7

FIG. 8

FIG. 9

FIG. 10

FIG. 11